# DEMANDE DE BREVET EUROPEEN

(11) **EP 0 644 356 A1**
(43) Date de publication de la demande: **22.03.1995**
(21) Numéro de dépôt: 94402066.8
(22) Date de dépôt: 16.09.1994
(51) Int. Cl.: F16H 3/66, B60K 17/06

(54) **Mécanisme de changement de vitesses automatique à triple descente d'engrenages**

(30) Priorité: 17.09.1993 FR 9311095
(71) Demandeur: REGIE NATIONALE DES USINES RENAULT, F-92109 Boulogne-Billancourt (FR)
(72) Inventeur: Valentin, Daniel, F-92500 Rueil Malmaison (FR)

(57) **Abrégé**

Mécanisme de changement de vitesses automatique à triple descente d'engrenages comportant à l'intérieur d'un carter (26) un arbre primaire (3) portant trois pignons de descente (5, 6, 7) qui attaquent respectivement un premier planétaire(12), un second planétaire (14) et le porte-satellites (11) d'un train épicycloïdal (17) porté par un arbre secondaire (8) parallèle à l'arbre primaire(3), caractérisé en ce qu'il comporte un premier embrayage (22) porté par l'arbre primaire (3) permettant d'immobiliser le premier pignon de descente (5) par rapport à celui-ci, un second embrayage (23) porté par l'arbre secondaire (8) permettant d'accoupler le second pignon de descente (6) à un planétaire (14) et un troisième embrayage (24) porté par l'arbre primaire (3) permettant d'immobiliser le troisième pignon de descente (7) sur celui-ci.

## Description

La présente invention se rapporte au domaine technique des transmissions automatiques comportant un convertisseur de couple hydrocinétique entraîné directement par l'arbre de sortie du moteur, et associé à un train épicycloïdal commandé par des freins et des embrayages. Plus précisément, elle concerne une boîte de vitesses automatique pour groupe moto-propulseur transversal.

Par la publication FR-2677422 de la demanderesse, on connaît un dispositif de changement de vitesses automatique de type transversal en bout, présentant à l'intérieur d'un carter, un axe primaire aligné sur l'arbre de sortie du moteur. Cet axe primaire porte un convertisseur hydrocinétique, qui entraîne, par l'intermédiaire d'engrenages cylindriques associés à plusieurs organes de commutation, un axe secondaire supportant le train épicycloïdal de la transmission.

L'adaptation de trois descentes d'engrenages sur un arbre secondaire de transmission automatique, telle que décrite dans cette publication, est très avantageuse, notamment car elle procure une grande liberté dans le choix des rapports. La transmission automatique obtenue dispose en effet de six rapports de marche avant, ce qui permet par exemple de choisir parmi ceux-ci cinq rapports présentant l'étagement souhaité sur une boîte à cinq vitesses, en n'utilisant pas l'un des trois rapports supérieurs. La disposition proposée pose cependant un problème spécifique lié aux vitesses relatives des organes en rotation. Ce problème est le suivant. Sur chaque descente d'engrenages de l'arbre primaire sur l'arbre secondaire, le mouvement est démultiplié. Les couples de pignons de chaque descente d'engrenages étant toujours en prise, la remontée du mouvement de l'arbre secondaire sur l'arbre primaire s'accompagne d'une multiplication pouvant conduire un pignon primaire tournant autour de l'arbre primaire à avoir une vitesse de rotation absolue supérieure au régime du moteur.

La "remontée" du mouvement vers l'arbre primaire d'une transmission automatique à arbres parallèles se produit sur certains rapports de la transmission, en raison de la disposition des freins et des embrayages vis-à-vis des pignons et de la logique de la commande hydraulique, imposant dans tous les cas que deux récepteurs soients serrés sur chaque rapport et que le passage du rapport n au rapport n+1 ou rapport n-1 s'effectue en serrant un nouveau récepteur et en relachant un récepteur de la combinaison précédente. On est alors en présence d'un couple de pignons entraîné "inutilement" par l'arbre secondaire et, notamment d'un pignon primaire tournant autour de l'arbre primaire avec une vitesse de rotation absolue supérieure au régime moteur. L'arbre secondaire, ainsi "accouplé" gratuitement à un couple de pignons présente une inertie globale très supérieure à sa propre inertie, difficilement compatible avec les dimensions habituelles des récepteurs hydrauliques de transmission automatique. Le souhait des constructeurs étant d'obtenir des boîtes de vitesses compactes sans surdimensionner les récepteurs hydrauliques, la réalisation d'un mécanisme de changement de vitesses automatiques à triple descente d'engrenages pose un problème général de "remontée" du mouvement sur la ligne primaire par les descentes d'engrenages entraînées, sans transmettre de couple, par l'intermédiaire de la ligne secondaire.

Conformément à l'invention, ce problème est résolu dans un mécanisme de changement de vitesses automatique à triple descente d'engrenages comportant à l'intérieur d'un carter un arbre primaire portant trois pignons de descente qui attaquent respectivement un premier planétaire, un second planétaire et le porte-satellites d'un train épicycloïdal porté par un arbre secondaire parallèle à l'arbre primaire, caractérisé en ce qu'il comporte un premier embrayage porté par l'arbre primaire permettant d'immobiliser le premier pignon de descente par rapport à celui-ci, un second embrayage porté par l'arbre secondaire permettant d'accoupler le second pignon de descente au second planétaire, et un troisième embrayage porté par l'arbre primaire, permettant d'immobiliser le troisième pignon de descente sur celui-ci.

Par ailleurs, lorsque le pignon primaire concerné par la "remontée" du mouvement sur la ligne primaire est supporté en rotation par des éléments de roulement en appui contre des parties fixes de la transmission, la vitesse de ces éléments, supérieure au régime du moteur, peut être très élevée.

Ces vitesses sont généralement incompatibles avec la résistance mécanique des éléments de roulement équipant habituellement les transmissions automatique.

Pour éviter tout risque de rupture au niveau de ces roulements, l'invention propose en outre de monter le premier pignon de descente sur des bagues de roulement placées autour de l'arbre primaire tandis que le second et le troisième pignon de descente sont fixés sur celui-ci, et que l'arbre primaire est maintenu à l'intérieur du carter par un roulement monté autour du second pignon de descente.

D'autres caractéristiques et avantages de l'invention apparaîtront clairement à la lecture de la description suivante d'un mode de réalisation particulier de celle-ci, en liaison avec les dessins annexés, sur lesquels
- la figure 1 est une coupe schématique du dispositif de l'invention,
- la figure 2 reproduit un tableau de commutation applicable à ce dispositif, et
- la figure 3 illustre de façon graphique l'étagement des rapports, d'un mécanisme de transmission conforme à l'invention.

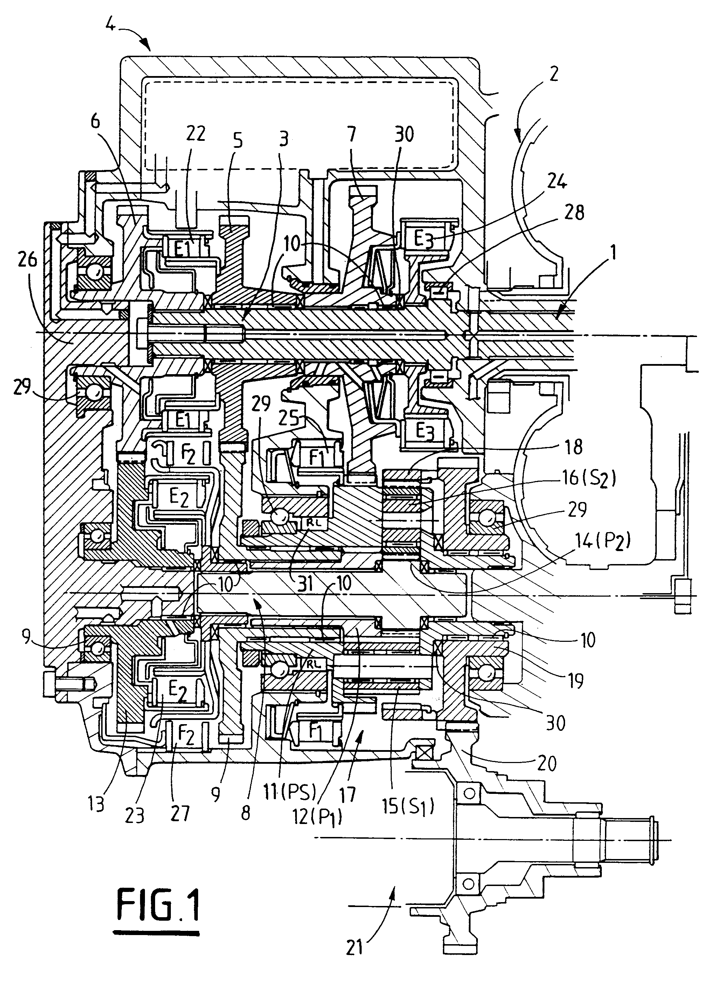

Sur la figure 1, on a représenté l'extrémité de l'arbre de sortie 1 d'un convertisseur de couple hydrocinétique 2. Sur cet arbre de sortie 1, est fixé l'arbre primaire 3 d'un mécanisme de changement de vitesses automatique 4. L'arbre primaire 3 porte trois pignons de descente 5, 6, 7 sur l'arbre secondaire 8 du mécanisme 4. Le premier pignon de descente 5 est monté sur l'arbre primaire 3 par l'intermédiaire de bagues 10. Il n'est donc pas fixé sur celui-ci.

Le pignon 5 engrène avec un premier pignon secondaire 9, solidaire du premier planétaire (P1) 12 du train épicycloïdal 17 du mécanisme 4. Un second pignon de descente 6, fixé sur l'arbre primaire 3 engrène avec un second pignon secondaire 13, monté autour de bagues de roulement 10 sur l'arbre secondaire 8. Enfin, un troisième pignon de descente 7, monté sur des bagues de roulement autour de l'arbre primaire 3 engrène avec le porte-satellites (PS) 11 du train épicycloïdal 17 porté par l'arbre secondaire 8.

Le train épicycloïdal 17 de la transmission comporte un premier planétaire (P1) 12 déjà mentionné et un second planétaire (P2) 14 confondu avec l'arbre secondaire 8. Le porte-satellites (PS) 11 supporte des satellites longs (S1) 15, en prise avec le premier planétaire (P1) 12, et des satellites courts (S2) 16, engrènant avec le second planétaire (P2) 14 et avec la couronne de sortie 18 du train 17. Cette dernière est reliée par une liaison flottante au pignon de sortie 19 attaquant la couronne 20 d'un différentiel 21, dont on n'a pas représenté le mécanisme intérieur.

Le mécanisme de changement de vitesse 4 proposé par l'invention, comporte cinq organes de commutations E1, E2, E3, F1 et F2, répartis entre ses lignes primaire et secondaire. Le premier embrayage E1, 22 porté par la ligne primaire permet de solidariser le premier pignon de descente 5 avec l'arbre primaire 3, donc d'assurer l'entrée du mouvement dans le train 17 par la première descente d'engrenages 5, 9 et le premier planétaire (P1) 12. Le serrage du second embrayage (E2) 23, porté par la ligne secondaire permet au mouvement d'emprunter la seconde descente d'engrenage 6, 13, en solidarisant le second pignon secondaire 13, du second planétaire (P2) 14, donc d'assurer l'entrée du mouvement dans le train 17 par celui-ci. Le troisième embrayage (E3) 24 est porté par la ligne primaire. Il permet de solidariser le troisième pignon de descente 7 de l'arbre primaire 3. Lorsque E3 est serré, le mouvement entre dans le train 17 par le porte-satellite (PS) 11. Le premier frein (F1) 25 disposé sur la ligne secondaire permet d'immobiliser le porte-satellites (PS) 11 vis-à-vis du carter 26, tandis que le second frein (F2) 27 également porté par la ligne secondaire est destiné à immobiliser le second planétaire (P2) 14 vis-à-vis du carter 26. Enfin, la roue libre (RL) 31 est montée autour du porte-satellites 11.

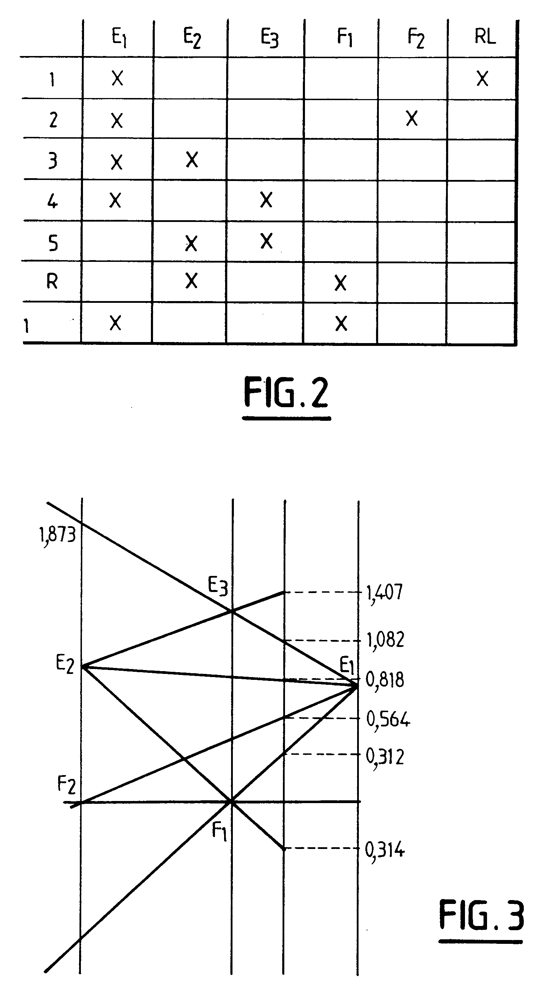

En se reportant à la figure 2, on voit que l'embrayage E1 est serré sur les quatre premiers rapports de marche avant et sur la première imposée, donc que la première descente d'engrenages 5, 9 est empruntée sur chacun de ces cinq rapports. Le premier rapport de marche avant est obtenu en ne serrant que le premier embrayage E1. Le porte-satellite est alors immobilisé par la roue libre RL et, le mouvement entre dans le train 17 par le premier planétaire P1. Sur le second rapport de marche avant, l'entrée du mouvement dans le train 17 s'effectue par le premier planétaire P1 (E1 serré), tandis que le second planétaire P2 est immobilisé par le second frein F2. Le troisième rapport de marche avant (E1 et E2 serrés) correpond à une rotation en bloc du train 17, puisque les deux planétaires P1 et P2 sont entraînés simultanément. Sur le quatrième rapport de marche avant, le premier et le troisième embrayage F1 et E3 sont serrés, si bien que le mouvement entre dans le train 17 par le premier planétaire P1 et le porte-satellite PS. Le cinquième rapport de marche avant est obtenu en serrant le second et le troisième embrayage E2 et E3, de sorte que le mouvement entre dans le train 17 par le second planétaire P2 et le porte-satellites PS.

Enfin, la marche arrière est assurée par l'immobilisation du porte-satellites PS, par rapport au carter 26 et l'entraînement du second planétaire P2 (E2 et F1 serrés), et la première imposée, en immobilisant le porte-satellites PS et en empruntant le premier planétaire (E1 et F1 serrés).

Outre la disposition des organes de transfert du couple et de commutation, la figure 1 fait apparaître celle des organes de roulement nécessaires au fonctionnement du mécanisme. Comme indiqué plus haut, le premier et le troisième pignon de descente 5, 7 sont montés sur l'arbre primaire 3 par l'intermédiaire de bagues de roulement 10, tandis que le second pignon de descente 6 est fixé sur celui-ci. Côté moteur, l'arbre primaire est supporté dans un palier 28, tandis qu'à son autre extrémité, il est maintenu vis-à-vis du carter par un roulement à billes 29 monté à l'extérieur du second pignon de descente 6. Enfin, le long de l'arbre 3, on trouve trois butées à aiguilles 30 respectivement placées à l'extérieur du troisième pignon de descente 7, entre le premier et le troisième pignon de descente 6 et 7, et entre le second et le premier pignon de descente 6 et 5.

L'arbre secondaire 8 est retenu à chacune de ses extrémités par un roulement à billes 29, disposés respectivement autour du second pignon secondaire 13 et autour de la couronne de descente 19 sur le diférentiel 21.

Le second pignon secondaire 13 est monté sur des bagues 10 autour de l'arbre secondaire 8 tandis que le premier pignon secondaire 9, solidaire du premier planétaire (P1) 12 est monté sur des bagues 10 autour de l'arbre primaire 3 et à l'intérieur du porte-satellites (PS) 11, lui-même retenu vis-à-vis du carter 27 à l'intérieur d'un roulement à billes 29. Enfin, les satellites (S1, S2) 15 et 16 sont également montés sur des bagues de roulement 10 autour du porte-satellites (PS) 11. Ce dernier tourne lui-même sur des bagues 10 à l'intérieur de la couronne de descente 9, et autour de l'arbre secondaire 8. Enfin on retrouve autour de celui-ci des butées à aiguilles 30, disposées respectivement entre le second planétaire (P2) 14 et le second pignon secondaire 9, entre le second planétaire (P2) 14 et le premier pignon secondaire 13, entre le premier planétaire (P1) 12 et le second planétaire (P2) 14, ainsi qu'entre le porte-satellites (PS) 11 et le second planétaire (P2) 14 et qu'entre le porte-satellites (PS) 11 et la couronne de descente 19.

Comme indiqué plus haut, l'adaptation de plusieurs descentes d'engrenages sur une transmission automatique à arbres parallèles pose d'une part un problème général d'inertie de la ligne secondaire et de dimensionnement des récepteurs hydrauliques utilisés pour rendre solidaires en rotation ces descentes d'engrenage de l'arbre primaire lors de l'engagement de certains rapports, et d'autre par un problème particulier de résistance mécanique de certains éléments de roulement, lié à la vitesse de rotation absolue très élevée de certains éléments de la ligne primaire, lorsqu'ils sont le siège d'une "remontée" de mouvement.

En se reportant à nouveau à la figure 1, et au tableau de la figure 2, on voit notamment que le problème de la remontée du mouvement par la seconde descente d'engrenages 6, 13 se pose sur le quatrième rapport de marche avant (E1, E3) serrés puisque le couple transite par la première descente d'engrenage 5, 9 et par le porte-satellites (PS) 11. Conformément à l'invention, le second pignon secondaire 13 monté sur des bagues 10 autour de l'arbre 8 n'est pas entraîné par celui-ci, mais par le second pignon de descente 6 fixé sur l'arbre primaire. Il n'y a donc pas de "remontée" du mouvement sur le quatrième rapport, de marche avant. Par ailleurs, tous les éléments de la ligne primaire tournent à la vitesse de l'arbre moteur 1. Aucune pièce de la ligne primaire ne tourne donc à une vitesse excessive par rapport au carter 26.

Sur le cinquième rapport de marche avant où se pose le même problème, puisque E2 et E3, étant serrés la première descente d'engrenages 5, 9 devient passive, on constate que le premier planétaire (P1) 12 entraîne le premier pignon de descente 5 par l'intermédiaire du premier pignon secondaire 9. Le premier pignon de descente 5 a donc une vitesse de rotation différente de celle de l'arbre primaire 3 autour duquel il est monté. Néanmoins, il tourne dans le même sens que celui-ci et n'est pas supporté par le carter 26. Aucune pièce tournante de la ligne primaire n'a une vitesse relative excèdant le régime du moteur, puisque le palier 28 et le roulement 29 supportant l'arbre primaire 3 à chacune de ses extrémités, ne sont pas en contact avec le premier pignon de descente 5. Les risques de rupture mécanique par suite de vitesses de rotation excessive de certains éléments sont donc évités.

L'étagement des rapports, illustré à titre d'exemple non limitatif par le graphique de RAVIGNEAUX de la figure 3, est particulièrement satisfaisant :
MAR: 0,314
1ère : 0,312
2ème: 0,564
3ème: 0,818
4ème: 1,082
5ème : 1,407

Ce graphique correspond à l'adoption d'un rapport de nombre de dents de 53/63 = 0,779 sur 'embrayage E1 et la première descente d'engrenages 5, 9 de 58/63 = 0,921 sur le second embrayage E2 et la seconde descente d'engrenages, et de 63/58 = 1,283 sur le troisième embrayage et la troisième descente d'engrenages. Comme indiqué plus haut, ces valeurs sont purement indicatives, et on peut envisager l'utilisation de rapports de nombre de dents différents sur chaque descente d'engrenages, sans sortir du cadre de l'invention.

Dans tous les cas l'architecture proposée par l'invention garantit qu'aucun élément tournant autour de la ligne primaire n'ait une vitesse relative supérieure au régime moteur.

En conclusion, l'invention propose une architecture de transmission automatique à arbres parallèle et triple descente d'engrenages résolvant de façon satisfaisante les problèmes de remontée du mouvement sur la ligne primaire et de vitesse de rotation des éléments portés par celle-ci.

## Revendications

**1)** Mécanisme de changement de vitesses automatique à triple descente d'engrenages comportant à l'intérieur d'un carter (26) un arbre primaire (3) portant trois pignons de descente (5, 6, 7) qui attaquent respectivement un premier planétaire(12), un second planétaire (14) et le porte-satellites (11) d'un train épicycloïdal (17) porté par un arbre secondaire (8) parallèle à l'arbre primaire(3), caractérisé en ce qu'il comporte un premier embrayage (22) porté par l'arbre primaire (3) permettant d'immobiliser le premier pignon de descente (5) par rapport à celui-ci, un second embrayage (23) porté par l'arbre secondaire (8) permettant d'accoupler le second pignon de descente (6) à un planétaire (14) et un troisième embrayage (24) porté par l'arbre primaire (3) permettant d'immobiliser le troisième pignon de descente (7) sur celui-ci.

**2)** Mécanisme de changement de vitesse selon la revendication 1, caractérisé en ce que le premier pignon de descente (5) est monté sur des bagues de roulement (10) autour de l'arbre primaire (3) tandis que le second et le troisième pignons de descente (6, 7) sont fixés sur celui-ci, et en ce que l'arbre primaire est maintenu à l'intérieur du carter (26), par un roulement (29) monté autour du second pignon de descente (6).

**3)** Mécanisme de changement de vitesses selon les revendications 1 ou 2, caractérisé en ce qu'il comporte un premier frein (25) permettant d'immobiliser le porte-satellites (11) vis-à-vis du carter (26) et un second frein (27) permettant d'immobiliser le second planétaire (14) vis-à-vis du carter (26).

**4)** Mécanisme de changement de vitesses selon la revendication 3, caractérisé en ce que le premier et le second freins (25, 27) sont portés par l'arbre secondaire (8).

**5)** Mécanisme de changement de vitesses selon l'une des revendications précédentes, caractérisé en ce que le premier pignon de descente (5) engrène avec un premier pignon secondaire (9) tournant à l'intérieur des bagues de roulement (10) entre le premier planétaire (12) et le porte-satellites (11).

**6)** Mécanisme de changement de vitesses selon l'une des revendications précédentes, caractérisé en ce que le second pignon de descente (6) engrène avec un second pignon secondaire (13), monté autour de l'arbre secondaire (8) par l'intermédiaire de bagues de roulement (10).

**7)** Mécanisme de changement de vitesses selon l'une des revendications précédentes, caractérisé en ce qu'il comporte une roue libre (31) montée autour du porte-satellites (11).

**8)** Mécanisme de changement de vitesses selon l'une quelconque des revendications précédentes, caractérisé en ce qu'il comporte une couronne de descente (19) sur un différentiel (20) tournant sur des bagues de roulement (10) autour du porte-satellites (11).

**9)** Mécanisme de changement de vitesses selon les revendications 6, 7 ou 8, caractérisé en ce que l'arbre secondaire (8) est supporté vis-à-vis du carter (26) par un roulement (29) monté autour du second pignon secondaire (13).

**10)** Mécanisme de changement de vitesses selon l'une quelconque des revendications précédentes, caractérisé en ce que l'arbre secondaire (8) est supporté vis-à-vis du carter (26) par un roulement (29) monté autour de la couronne de descente (19).
